(19)

Europäisches
Patentamt
European
Patent Office
Office européen
des brevets

(11) **EP 3 105 470 B1**

(12) **EUROPEAN PATENT SPECIFICATION**

(45) Date of publication and mention
of the grant of the patent:
**13.09.2017 Bulletin 2017/37**

(21) Application number: **15710589.1**

(22) Date of filing: **09.02.2015**

(51) Int Cl.:
***F16D 66/00*** *(2006.01)*

(86) International application number:
**PCT/IB2015/000122**

(87) International publication number:
**WO 2015/121728 (20.08.2015 Gazette 2015/33)**

(54) **DISC BRAKE VIBRATION ESTIMATING DEVICE**

VORRICHTUNG ZUR SCHÄTZUNG VON SCHEIBENBREMSENVIBRATION

DISPOSITIF D'ESTIMATION DE VIBRATION DE FREIN À DISQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2014 JP 2014024916**

(43) Date of publication of application:
**21.12.2016 Bulletin 2016/51**

(73) Proprietor: **TOYOTA JIDOSHA KABUSHIKI
KAISHA**
**Toyota-shi, Aichi-ken 471-8571 (JP)**

(72) Inventor: **SHINTANI, Kohei**
**Toyota-shi**
**Aichi-ken 471-8571 (JP)**

(74) Representative: **Kuhnen & Wacker**
**Patent- und Rechtsanwaltsbüro**
**Prinz-Ludwig-Straße 40A**
**85354 Freising (DE)**

(56) References cited:
**WO-A1-2013/084363     JP-A- 2004 019 715**

**Description**

BACKGROUND OF THE INVENTION

1. Field of the Invention

The present invention relates to a disc brake vibration estimating device.

2. Description of Related Art

A disc brake brings pads into contact with a rotating disc rotor with a hydraulic pressure of a hydraulic cylinder to generate a braking force. In the disc brake, vibration occurs by the contact of the pads with the rotating disc rotor, and the rotating disc rotor and the pads resonate to generate a so-called brake squeal. Here, the vibration mode of the brake squeal includes an out-of-plane vibration mode and an in-plane vibration mode. The out-of-plane vibration mode is a mode in which contact surfaces (frictional surfaces) of the disc rotor with the pads vibrates in the same direction as a rotation axis, that is, in an out-of-plane direction. The in-plane vibration mode is a mode in which the contact surfaces (frictional surfaces) of the disc rotor vibrate in a circumferential direction of the disc rotor, that is, in an in-plane direction.
For example, WO-A-2013/084363 discloses a mathematical model for estimating vibration of a disc brake in an in-plane vibration mode. By using this mathematical model, it is possible to prepare a disc brake model having finite elements corresponding to the disc brake and to estimate a brake squeal (brake squeal in the in-plane direction of the disc rotor) in the in-plane vibration mode by simulation. Accordingly, it is possible to design a disc brake with a reduced brake squeal.
The mathematical model is a model in which vibration in the in-plane direction is excited by an in-plane spring value generated in a circumferential direction (in-plane direction) of the disc rotor. The in-plane spring value is obtained by modeling the resistance in a shearing direction due to the surface roughness of the disc rotor and the pads using a spring. It is difficult to actually measure the in-plane spring value and the estimation method thereof is not set up. Accordingly, the estimation of vibration of the disc brake in the in-plane direction using the mathematical model requires improvement in accuracy.

SUMMARY OF THE INVENTION

The invention provides a disc brake vibration estimating device that can accurately estimate vibration of a disc brake in an in-plane direction by accurately estimating an in-plane spring value.
According to an aspect of the invention, there is provided a disc brake vibration estimating device that estimates vibration of a disc brake, which generates a braking force by bringing pads into contact with a rotating disc rotor, at the time of contact of the pads with the disc rotor on the basis of at least a disc rotor model corresponding to the disc rotor and a pad model corresponding to the pads, in which both models have finite elements. The disc brake vibration estimating device includes: an in-plane spring value calculating unit configured to calculate an in-plane spring value for determining an in-plane vibromotive force generated in an in-plane direction of the disc rotor; and a vibration estimating unit configured to estimate the vibration of the disc brake in the in-plane direction on the basis of the calculated in-plane spring value. The in-plane spring value calculating unit calculates the in-plane spring value on the basis of an in-plane frictional coefficient of a contact surface at which the pad model comes in contact with the disc rotor model, an out-of-plane frictional coefficient of the contact surface, an out-of-plane spring value for an out-of-plane vibromotive force generated in an out-of-plane direction of the disc rotor, and an actual movement on the condition that a value obtained by integrating moment generated at a node constituting the contact surface over the entire contact surface is balanced with the actual moment of the pads as a whole measured in a state in which the pads come in contact with the rotating disc rotor.
In the disc brake vibration estimating device according to the aspect, the in-plane spring value calculating unit may calculate the in-plane spring value in a state in which the node is transformed from an orthogonal coordinate system to a natural coordinate system.
In the disc brake vibration estimating device according to the aspect, the in-plane spring value calculating unit may calculate the in-plane spring value on the basis of the following Expression 1,

<Expression 1>

$$K_{cpr} = -\frac{\dfrac{M}{2\det J} - \mu_x K_{pr}\alpha_\xi^2\left(1 + \dfrac{1}{\beta\pi}\sin(\beta\pi/2)\right)}{\mu_z \alpha_\xi^2\left(1 - \dfrac{1}{\beta\pi}\sin(\beta\pi/2)\right)}$$

where $K_{pr}$ represents the in-plane spring value, $K_{pr}$ represents the out-of-plane spring value, M represents the actual moment, detJ represents a Jacobian, $\mu_x$ represents the in-plane frictional coefficient of the contact surface, $\mu_z$ represents the out-of-plane frictional coefficient of the contact surface, $\alpha_\zeta$ represents a value based on the magnitude of displacement in the in-plane direction, $\alpha_\xi$ represents a value based on the magnitude of displacement in the out-of-plane direction, and $\beta$ represents the order of an in-plane vibration mode.

According to the aforementioned aspect, it is possible to accurately estimate vibration of a disc brake in an in-plane direction.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram illustrating a configuration example of a disc brake vibration estimating device according to an embodiment of the invention;
FIG. 2 is a diagram illustrating a surface-pressure vibration model;
FIG. 3 is a diagram illustrating coordinate transformation;
FIG. 4 is a diagram illustrating moment of pads as a whole;
FIG. 5 is a diagram illustrating a relationship between a surface pressure and a compression displacement;
FIG. 6 is a diagram illustrating a displacement graph in a natural coordinate system;
FIG. 7 is a diagram illustrating a displacement graph in the natural coordinate system; and
FIG. 8 is a flowchart illustrating a vibration estimating method in the disc brake vibration estimating device according to this embodiment.

DETAILED DESCRIPTION OF EMBODIMENTS

An embodiment of the invention will be described below in detail with reference to the accompanying drawings. The invention is not limited to the following description in the embodiment. Elements described below include elements that can be easily thought out by those skilled in the art and substantially identical elements. The elements described below can be appropriately combined. The elements can be skipped, replaced, or modified in various forms without departing from the gist of the invention.

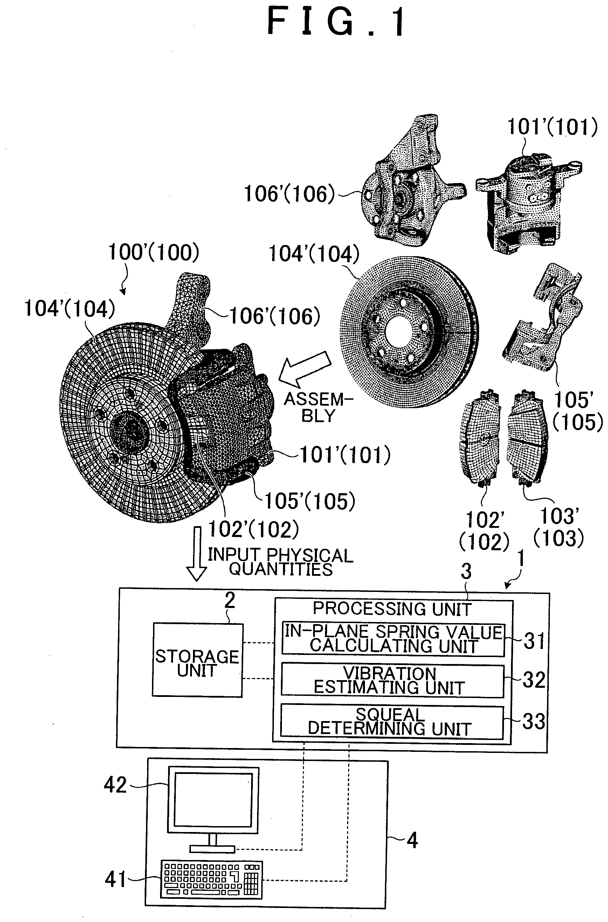

A disc brake vibration estimating device according to this embodiment is a mathematical analysis device based on a finite element method and serves to estimate vibration of a disc brake in at least an in-plane direction and determines whether the vibration of the disc brake is at a brake squeal level, on the basis of a disc brake model (which includes a disc rotor model corresponding to a disc rotor and pad models corresponding to pads) having finite elements to correspond to the disc brake. FIG. 1 is a diagram illustrating a configuration example of the disc brake vibration estimating device according to this embodiment.

The disc brake vibration estimating device 1 estimates vibration at the time of bringing pads 102, 103 into contact with a disc rotor 104, that is, vibration of the disc brake 100 in an in-plane vibration mode in this embodiment, and determines whether the vibration of the disc brake 100 is at a brake squeal level, when the disc brake 100 generates a braking force by bringing the pads 102, 103 into contact with the rotating disc rotor 104, and includes a processing unit 3 as a processor and storage unit 2. The disc brake vibration estimating device 1 is connected to an input and output device 4, and an input unit 41 thereof is used to receive various set values or to give a command to the storage unit 2 and the processing unit 3, for example, to give a command for performing a disc brake vibration estimating method to the processing unit 3. Here, an input device such as a keyboard, a mouse, and a microphone can be used as the input unit 41. In the method of allowing the disc brake vibration estimating device 1 to acquire the set values, input physical quantities are stored in advance in the storage unit 2 or the set values stored in an external storage unit may be acquired via an input and output interface and a communication interface (not illustrated) in a wired or wireless manner, in addition to use of the input unit 41.

In the disc brake 100, the pads 102, 103 attached to a caliper 101 are arranged to face each other in an axial direction of the disc rotor 104 with the disc rotor 104 interposed therebetween. A hydraulic cylinder not illustrated is disposed in the caliper 101, the distance between the pads 102, 103 decreases by a pressure generated from the hydraulic cylinder and the pads 102, 103 come in contact with the disc rotor 104 rotating along with a vehicle wheel not illustrated, whereby a frictional force is generated. The generated frictional force is applied to the caliper 101 in the reverse direction of the rotation direction of the disc rotor 104, thereby serving as a braking force for decelerating a vehicle not illustrated. That is, the disc brake 100 generates a braking force. Reference numeral 105 represents a mounting bracket that supports the caliper 101 and the pads 102, 103 so as to be movable in the axial direction relative to the disc rotor 104. Reference numeral 106 represents a hub to which the disc rotor 104 is fixed.

A disc brake vibration estimating program into which a disc brake vibration estimating method for realizing estimation of vibration of the disc brake 100 is incorporated is stored in the storage unit 2. Here, the storage unit 2 can be constituted by storage units such as a fixed disk device such as a hard disk device, a nonvolatile memory (a storage medium readable only such as a CD-ROM) such as a flexible disk, a magneto-optical disk device, or a flash memory, or a volatile memory such as a random access memory (RAM) or combination thereof.

The disc brake vibration estimating program is not limited to a single program, but the function thereof may be realized in cooperation with a particular program stored in advance in a computer system, for example, a program such as an operating system (OS). The disc brake vibration estimating program for realizing the function of the processing unit 3 illustrated in FIG. 1 may be stored in a computer-readable recording medium and the disc brake vibration estimating program recorded on the recording medium may be read and executed by a computer system, whereby the disc brake vibration estimating method according to this embodiment can be performed. The "computer system" mentioned herein includes an OS or hardware such as peripherals.

The processing unit 3 includes a memory such as a RAM and a ROM and a central processing unit (CPU). At the time estimating vibration of the disc brake 100, the processing unit 3 reads the disc brake vibration estimating program into a memory (not illustrated) of the processing unit 3 and performs operations on the basis of set values acquired by the disc brake vibration estimating device 1. The processing unit 3 appropriately stores numerical values in operations in the storage unit 2 and appropriately reads the stored numerical values from the storage unit 2 to perform the operations. The processing unit 3 may be realized by dedicated hardware instead of the disc brake vibration estimating program. The vibration estimation result or the brake noise determination result of the disc brake 100 or the like, which has been prepared by the operations of the processing unit 3, is displayed by a display unit 42 of the input and output device 4. Here, a liquid crystal display (LCD) or an organic EL display can be used as the display unit 42. The vibration estimation result or the brake noise determination result of the disc brake 100 or the like can be output to a printer not illustrated. The storage unit 2 may be installed in the processing unit 3 or may be installed in another device (for example, database server). The storage unit may be configured to access the disc brake vibration estimating device 1 from a terminal (not illustrated) including the input and output device 4 in a wired or wireless manner.

The processing unit 3 conceptually includes an in-plane spring value calculating unit 31, a vibration estimating unit 32, and a squeal determining unit 33.

The in-plane spring value calculating unit 31 is an in-plane spring value calculating unit and calculates an in-plane spring value $K_{cpr}$ for calculating an in-plane vibromotive force generated in an in-plane direction of the disc rotor 104. In this embodiment, the in-plane spring value calculating unit 31 calculates the in-plane spring value $K_{cpr}$ on the basis of Expression 2 (calculation expression) in which a node s is transformed from an orthogonal coordinate system to a natural coordinate system on the condition that a value, which is obtained by integrating moment $M_s$ generated in a node s constituting a contact surface X on which pad models 102', 103' corresponding to the pads 102, 103 come in contact with a disc rotor model 104' corresponding to the disc rotor 104 over the entire contact surface X, is balanced with actual moment M of the pads as a whole which is measured in a state in which the pads 102, 103 come in contact with the disc rotor 104 rotating actually.

<Expression 2>

$$K_{cpr} = -\frac{\dfrac{M}{2\det J} - \mu_x K_{pr}\alpha_\xi^2\left(1+\dfrac{1}{\beta\pi}\sin(\beta\pi/2)\right)}{\mu_z\alpha_\xi^2\left(1+\dfrac{1}{\beta\pi}\sin(\beta\pi/2)\right)}$$

Here, $K_{cpr}$ represents an in-plane spring value, $K_{pr}$ represents an out-of-plane spring value, M represents an actual moment, detJ represents a Jacobian, $\mu_x$ represents an in-plane frictional coefficient of the contact surface, $\mu_z$, represents an out-of-plane frictional coefficient of the contact surface, $\alpha_\zeta$ represents a value based on the magnitude of displacement in the in-plane direction, $\alpha_\xi$ represents a value based on the magnitude of displacement in the out-of-plane direction, and β represents the order of an in-plane vibration mode. Here, $\alpha_\zeta$ a value determined on the basis of the magnitude of displacement in the circumferential direction of the disc rotor 104, that is, in the x direction, which is a tangential direction of the disc brake model 104' in the in-plane vibration model. $\alpha_\xi$ represents a value determined on the basis of the magnitude of displacement in the axial direction of the disc rotor 104, that is, in the z direction which is a normal direction (axial direction) of the disc brake model 104' in the in-plane vibration model. $\alpha_\zeta$ and $\alpha_\xi$ are values based on an experimental fact that the pads 102, 103 come in contact with the disc rotor 104 and is generally 1.

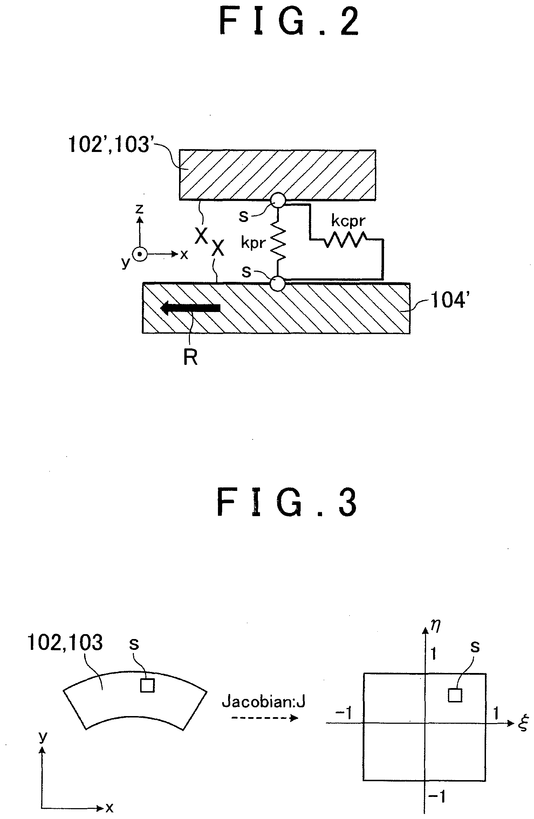

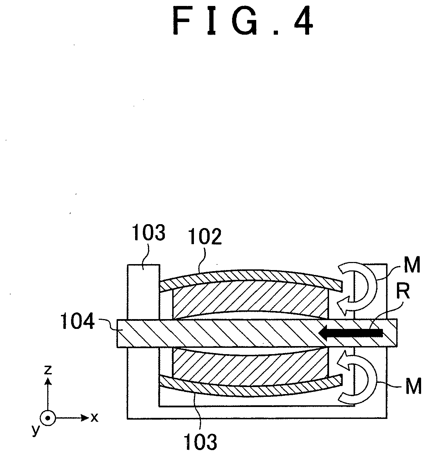

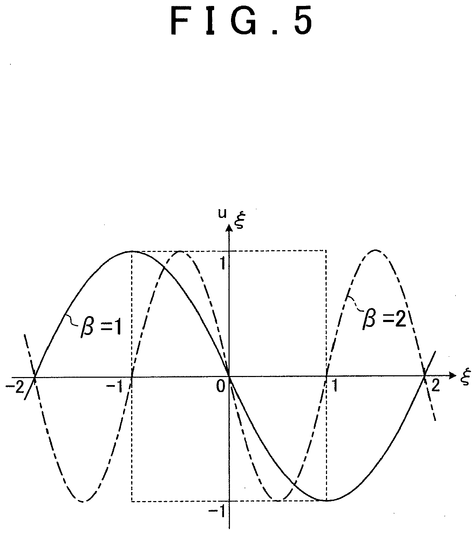

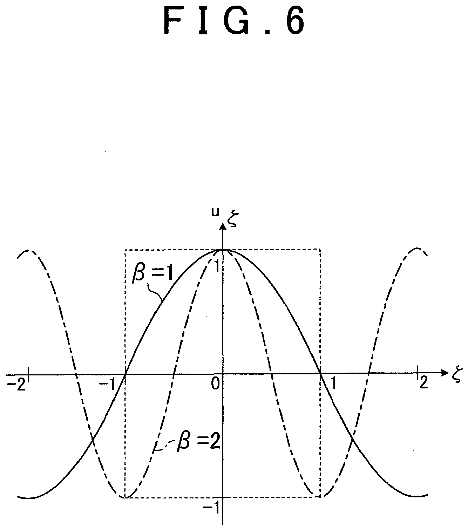

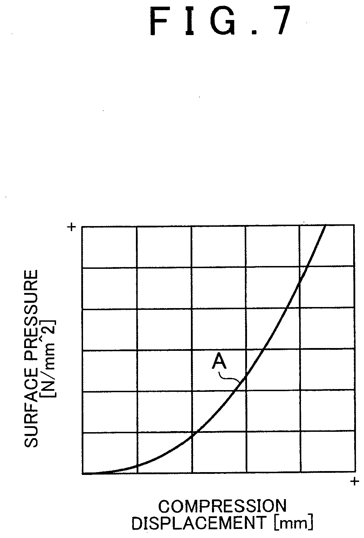

An induction method of Expression 2 will be described below. FIG. 2 is a diagram illustrating an in-plane vibration model. FIG. 3 is a diagram illustrating coordinate transformation. FIG. 4 is a diagram illustrating moment of the pads as a whole. FIG. 5 is a diagram illustrating a relationship between a surface pressure and a compression displacement. FIG. 6 is a diagram illustrating a displacement graph in the natural coordinate system. FIG. 7 is a diagram illustrating a displacement graph in the natural coordinate system.

In this embodiment, a model in which the in-plane spring value $K_{cpr}$ and the out-of-plane spring value $K_{pr}$ are set for a node s on the contact surface between the disc rotor 104 and the pads 102, 103, that is, as illustrated in FIG. 2, the contact surface X between the disc brake model 104' and the pad models 102', 103' in the orthogonal coordinate system of x, y, and z, is used as the in-plane vibration model. In the in-plane vibration model, it is assumed that the disc brake 100 is not deformed in the diameter direction thereof, that is, in the y direction. In the drawings, R represents the rotation direction of the disc rotor 104.

The in-plane spring value $K_{cpr}$ is a spring constant of an in-plane spring which expands and contracts in the circumferential direction of the disc rotor 104, that is, the x direction which is the tangential direction of the disc brake model 104' in the in-plane vibration model. That is, an in-plane vibromotive force $F_{cpr}$ generated in the in-plane direction of the disc rotor 104 is determined by multiplying the in-plane spring value $K_{cpr}$ by the displacement $u_x$ in the x direction at the node s. The in-plane vibromotive force $F_{cpr}$ is a force in the x direction acting on the node s. On the other hand, the out-of-plane spring value $K_{pr}$ is a spring constant of an in-plane spring which expands and contracts in the axial direction of the disc rotor 104, that is, the z direction which is the axial direction of the disc brake model 104' in the in-plane vibration model. That is, an out-of-plane vibromotive force $F_{pr}$ generated in the out-of-plane direction of the disc rotor 104 is determined by multiplying the out-of-plane spring value $K_{pr}$ by the displacement $u_z$ in the z direction at the node s. The out-of-plane vibromotive force $F_{pr}$ is a force in the z direction acting on the node s.

In the in-plane vibration model, ta force $f_x$ in the x direction and a force $f_z$ in the z direction acting on the node s are expressed by Expressions 3 and 4, respectively. $\mu_x$ and $\mu_z$ can be calculated from specifications of the disc rotor 104 and the pads 102, 103 such as dimension, mass, material, inertial moment, longitudinal elastic modulus, and shearing elastic modulus.

<Expression 3>

$$f_z = K_{pr}u_z + \mu_z K_{cpr}u_x$$

<Expression 4>

$$f_z = \mu_x K_{pr}u_z + K_{cpr}u_x$$

The moment $M_s$ generated at the node s is expressed by Expression 5.

<Expression 5>

$$M_s = f_x u_z + f_z u_x$$
$$= \left( \mu_x K_{pr} u_z + K_{cpr} u_x \right) u_z + \left( K_{pr} u_z + \mu_z K_{cpr} u_x \right) u_x$$
$$= \mu_x K_{pr} u_z^2 + \left( K_{cpr} + K_{pr} \right) u_x u_z + \mu_z K_{cpr} u_x^2$$

A value obtained by integrating the moments $M_s$ generated at the node s over the entire contact surface X, that is, the integrated moment value, is moment generated in the whole pad models 102', 103' by bringing the pad models 102', 103' with the disc rotor model 104'. It can be estimated that the integrated node moment value and the actual moment of the whole pads 102, 103 in the state in which the pads 102, 103 come in contact with the actually-rotating disc rotor 104 are equal to each other. That is, it can be estimated that the value acquired on the assumption and the value obtained by actual measurement are equal to each other. Accordingly, on the condition that the integrated node moment value and the actual moment M are balanced, the balance expression of Expression 5 and the actual moment M is Expression 6, and Expression 6 can be developed into Expression 7.

<Expression 6>

$$\int_s M_s \, ds = M$$

<Expression 7>

$$\int_s \left( \mu_x K_{pr} u_z^2 + \left( K_{cpr} + K_{pr} \right) u_x u_z + \mu_z K_{cpr} u_x^2 \right) ds = M$$

The actual moment M employs a measured value when the moment can be directly measured in a state in which the pads 102, 103 come in contact with the actually-rotating disc rotor 104, and is calculated from a measured value, other than the actual moment M, varying with the variation of the actual moment M measured in the state in which the pads 102, 103 come in contact with the actually-rotating disc rotor 104 when it is difficult to measure the moment. For example, the actual moment M is calculated from a measured value based on a variation in torque acting on the disc rotor 104 in the state in which the pads 102, 103 come in contact with the actually-rotating disc rotor 104. That is, the actual moment M is a value based on an experimental fact that the pads 102, 103 come in contact with the actually-rotating disc rotor 104.

Then, the balance expression in a state in which the node s is transformed from the orthogonal coordinate system to the natural coordinate system is obtained. In Expressions 6, 7, the surface integration of the contact surface X between the pad models 102', 103' and the disc rotor model 104', that is, calculation corresponding to the number of nodes s on the contact surface X, is required. When the shapes of the pads 102, 103 are changed, the number of nodes s is also changed and it is thus preferable that the in-plane spring value $K_{cpr}$ be calculated regardless of the shapes of the pads 102, 103. Accordingly, as illustrated in FIG. 3, a minute area ds (node s) on the contact surface X between the pad models 102', 103' and the disc rotor model 104' on the x-y plane of the orthogonal coordinate system is transformed to the $\xi$-$\eta$ plane ($-1 \leq \xi \leq 1$, $-1 \leq \eta \leq 1$) of the natural coordinate system using a Jacobian, (Jacobian matrix). Therefore, the node s is transformed from an x-y-z coordinate system as the orthogonal coordinate system to a $\xi$-$\eta$-$\zeta$ coordinate system as the natural coordinate system. Specifically, Expression 9 is obtained by substituting Expression 8 for Expression 7.

<Expression 8>

$$\begin{Bmatrix} \xi \\ \eta \\ \zeta \end{Bmatrix} = [J] \begin{Bmatrix} x \\ y \\ z \end{Bmatrix}$$

<Expression 9>

$$\int_{-1}^{1}\int_{-1}^{1} \left( \mu_x K_{pr} u_\zeta^2 + \left( K_{cpr} + K_{pr} \right) u_\xi u_\zeta + \mu_z K_{cpr} u_\xi^2 \right) \det J d\xi d\eta = M$$

In the state in which the pads 102, 103 come in contact with the actually-rotating disc rotor 104, as an experimental fact, the inventor of the invention proved that bending corresponding to the order of the in-plane vibration mode occurs in the pads 102, 103. For example, as illustrated in FIG. 4, when the in-plane vibration mode is at the first order, that is, in the first-order in-plane mode, first-order bending occurs in the pads 102, 103. From this experimental fact, it is thought that the vibration of the disc brake 100 in the in-plane direction amplifies the amplitude in the in-plane direction of the disc rotor 104 due to the frictional force generated in the in-plane direction of the disc rotor 104 because the first-order bending of the pads 102, 103 is synchronized in the same phase.

Since the displacement of the contact surface corresponds to the bending of the pads 102, 103, the displacement of the contact surface X in the natural coordinate system corresponds to the bending mode of the pad models 102', 103'. The displacement $u_x$ in the tangential direction (x direction) of the node s is the displacement $u_\xi$ in the $\xi$ direction in the natural coordinate system, which is a sin wave as illustrated in FIG. 5 and is expressed by Expression 10. The range in the x direction of the contact surface X is $-1 \leq \xi \leq 1$ in the $\xi$ direction of the natural coordinate system as illustrated in the same drawing. The displacement $u_z$ in the normal direction (z direction) of the node s is the displacement $u_\zeta$ in the $\zeta$ direction in the natural coordinate system, which is a cos wave as illustrated in FIG. 6 and is expressed by Expression 11. The range in the z direction of the contact surface X is $-1 \leq \zeta \leq 1$ in the $\zeta$ direction of the natural coordinate system as illustrated in the same drawing.

<Expression 10>

$$u_\xi = -\alpha_\xi \sin\left( \beta\pi / 2 \cdot \xi \right)$$

<Expression 11>

$$u_\zeta = \alpha_\zeta \cos\left( \beta\pi / 2 \cdot \zeta \right)$$

Expression 12 is obtained by substituting Expressions 10, 11 for Expression 9.

<Expression 12>

$$\int_{-1}^{1}\int_{-1}^{1} \left( \begin{array}{l} \mu_x K_{pr} \alpha_\zeta^2 \cos^2\left( \beta\pi / 2 \cdot \xi \right) - \dfrac{1}{2} \alpha_\xi \alpha_\zeta \left( K_{cpr} + K_{pr} \right) \sin\left( \beta\pi\xi \right) \\ + \mu_z K_{cpr} \alpha_\xi^2 \sin^2\left( \beta\pi / 2 \cdot \xi \right) \end{array} \right) \det J d\xi d\eta = M$$

Expression 16 is obtained from Expression 12 using the following relational expressions, Expression 13, Expression 14, and Expression 15.

<Expression 13>

$$\cos(\alpha) \cdot \sin(\alpha) = \frac{1}{2}\sin(2\alpha)$$

<Expression 14>

$$\int \cos^2 \frac{\beta\pi}{2}\xi d\xi = \frac{1}{2}\xi + \frac{1}{2\beta\pi}\sin(\beta\pi/2 \cdot \xi)$$

<Expression 15>

$$\int \sin^2 \frac{\beta\pi}{2}\xi d\xi = \frac{1}{2}\xi - \frac{1}{2\beta\pi}\sin(\beta\pi/2 \cdot \xi)$$

<Expression 16>

$$2\left(\mu_x K_{pr}\alpha_\zeta^2\left(1 + \frac{1}{\beta\pi}\sin(\beta\pi/2)\right) + \mu_z K_{cpr}\alpha_\xi^2\left(1 + \frac{1}{\beta\pi}\sin(\beta\pi/2)\right)\right)\det J = M$$

Then, Expression 2 is obtained by solving Expression 16 for the in-plane spring value $K_{cpr}$. Here, the out-of-plane spring value $K_{pr}$ is a value based on the experimental fact. Specifically, Graph A indicating the relationship between the compression displacement and the surface pressure (pressure) is obtained as illustrated in FIG. 7 by a compression experiment using a frictional member of the same material as the contact surfaces of the pad models 102', 103', and the slope of Graph A is used as the out-of-plane spring value $K_{pr}$.

The vibration estimating unit 32 estimates the vibration of the disc brake 100 on the basis of the in-plane spring value $K_{cpr}$ calculated by the in-plane spring value calculating unit 31 and a mathematical model based on a self-excited vibration phenomenon. In this embodiment, the vibration of the disc brake 100 is estimated, for example, on the basis of the in-plane spring value $K_{cpr}$ and Expression 17.

<Expression 17>

$$[M]\ddot{u} + [K]u = \mu[K_{pr}]u + [K_{cpr}]u$$

[M] represents a mass matrix of the disc brake 100, [K] represents a stiffness matrix of the disc brake 100, u represents a displacement vector of the disc brake 100, $\mu$ represents a frictional coefficient between the disc rotor 104 and the pads 102, 103, $K_{cpr}$ represents the in-plane spring value (contact stiffness in the in-plane direction), and $K_{pr}$ represents the out-of-plane spring value (contact stiffness in the out-of-plane direction).

The squeal determining unit 33 determines the squeal of the disc brake 100 in the in-plane direction on the basis of the displacement when a predetermined time passes from the start of estimation in this embodiment, after the vibration of the disc brake 100 is estimated by the vibration estimating unit 32. The squeal determining unit 33 determines whether the displacement x of a predetermined node s in the disc rotor model 104' which is a determination target, for example, after a predetermined time to passes from the start of estimation is equal to or greater than a reference value $U_{max}$, and determines that the squeal of the disc brake 100 in the in-plane direction occurs when the displacement x is equal to or greater than the reference value $u_{max}$.

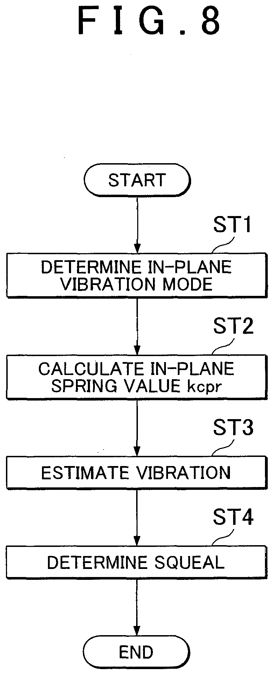

The disc brake vibration estimating method of the disc brake vibration estimating device 1 will be described below. FIG. 8 is a flowchart illustrating the disc brake vibration estimating method of the disc brake vibration estimating device according to this embodiment.

First, in this embodiment, a disc brake model 100' is generated by preparing a finite element model based on a finite element method (FEM) for each of the caliper 101, the pads 102, 103, the disc rotor 104, the mounting bracket 105, and the hub 106 and combining the prepared models (see FIG. 1). The disc brake model 100' may be generated in advance. In this case, the disc brake vibration estimating device 1 may acquire the disc brake model 100' generated in advance.

Then, as illustrated in FIG. 8, the in-plane spring value calculating unit 31 of the processing unit 3 determines the in-plane vibration mode (step ST1). The in-plane spring value calculating unit 31 acquires the values (such as $K_{pr}$, M, $\alpha_\zeta$, and $\alpha_\xi$) set on the basis of the experimental facts, the order $\beta$ of the in-plane vibration mode as a target, the values (such as $\mu_x$ and $\mu_z$) set from the specifications of the disc brake 100 in advance, and calculates the in-plane spring value $K_{cpr}$ on the basis of the values and Expression 2.

Then, the vibration estimating unit 32 of the processing unit 3 estimates the vibration of the disc brake in the in-plane direction on the basis of the in-plane spring value $K_{cpr}$ calculated by the in-plane spring value calculating unit 31 (step ST2). The vibration estimating unit 32 estimates the vibration in the in-plane direction at the node s on the basis of the in-plane spring value $K_{cpr}$ and Expression 17.

Then, the squeal determining unit 33 determines the squeal of the disc brake 100 in the in-plane direction (step ST4). The squeal determining unit 33 determines whether a first-order in-plane mode, that is, a brake squeal having a node (a point different 90 degrees from the node is an antinode) every 180 degrees in the circumferential direction of the disc rotor 104 occurs, for example, when the calculation of Expression 17 is performed on the first-order in-plane mode ($\beta=1$). In this embodiment, the squeal determining unit 33 determines whether the displacement u of a predetermined node s in the model of the disc rotor 104 to be determined after a predetermined time to passes from the start of calculation by the vibration estimating unit 32, that is, the start of estimation, is equal to or greater than a reference value $u_{max}$, and determines that a squeal of the disc brake 100 in the first-order in-plane mode occurs when the displacement is equal to or greater than the reference value $u_{max}$. Accordingly, as the estimation result of vibration by the vibration estimating unit 32, it is possible to easily determine whether a brake squeal in the in-plane direction of the disc brake 100 occurs by estimating the vibration of the disc brake 100 in the in-plane direction. Here, the reference value $u_{max}$ varies depending on the shapes, dimensions, and materials of the elements of the disc brake 100, the magnitude of the surface pressure at the time of bringing the pads 102, 103 into contact with the disc rotor 104, the in-plane vibration mode to be calculated, and the like.

As described above, in the disc brake vibration estimating device 1 according to this embodiment, the in-plane spring value $K_{cpr}$ is calculated using Expression 2 on the basis of the frictional coefficients $\mu_x$, $\mu_z$, the out-of-plane spring value $K_{pr}$, and the actual moment M on the condition that a value obtained by integrating, the moment $M_s$ generated at the node s constituting the contact surface X over the entire contact surface X is balanced with the actual moment M. That is, in this embodiment, the in-plane spring value $K_{cpr}$ which it was difficult to measure and to calculate using only the value obtained on the assumption can be calculated using both the value obtained on the assumption and the value obtained by measurement. Accordingly, it is possible to accurately estimate the in-plane spring value $K_{cpr}$ which it was difficult to measure and to calculate using only the value obtained on the assumption. Accordingly, since the vibration of the disc brake 100 in the in-plane direction is estimated on the basis of the in-plane spring value $K_{cpr}$ which has been accurately estimated, it is possible to accurately estimate the vibration.

Since the in-plane spring value $K_{cpr}$ is calculated in a state in which a node s is transformed from the orthogonal coordinate system to the natural coordinate system, it is possible to calculate the in-plane spring value $K_{cpr}$ without considering the shapes of the pads 102', 103'. The displacement on the contact surface corresponds to the bending of the pads 102, 103. Accordingly, it is possible to calculate the in-plane spring value $K_{cpr}$ on the basis of the relationships (Expressions 8, 9) of the displacement on the contact surface X which have been calculated based on the experimental fact of the bending of the pads 102, 103. Accordingly, the in-plane spring value $K_{cpr}$ can be calculated by an explicit expression such as Expression 2 and the calculation of several nodes s on the contact surface X becomes unnecessary. As a result, it is possible to greatly reduce a load for calculating the in-plane spring value $K_{cpr}$.

In the aforementioned embodiment, the squeal determining unit 33 determines the squeal of the disc brake 100 in the in-plane direction on the basis of the displacement after a predetermined time passes from the start of estimation, but the invention is not limited to this configuration and a squeal may be determined on the basis of a value based on the displacement. For example, the squeal determining unit 33 may determine whether a norm of the displacement u of a predetermined node in a model of the disc rotor 104 to be determined after a predetermined time t0 passes after the start of calculation by the vibration estimating unit 32, that is, from the start of estimation is equal to or greater than the reference value $u_{max}$, and may determine that a squeal of the disc brake 100 in the in-plane direction occurs when the norm is equal to or greater than the reference value $u_{max}$.

The disc brake vibration estimating device according to this embodiment may be used to design the disc brake 100. In designing the disc brake 100, components of the disc brake 100 can be designed so as to suppress vibration of the disc brake 100 in the in-plane direction which is estimated by the disc brake vibration estimating device 1.

**Claims**

1. A disc brake vibration estimating device that estimates vibration of a disc brake (100), which generates a braking force by bringing pads (102,103) into contact with a rotating disc rotor (104), at a time of contact of the pads with the disc rotor based on at least a disc rotor model (104') corresponding to the disc rotor and a pad model (102', 103') corresponding to the pads, both models having finite elements, the disc brake vibration estimating device comprising:

   an in-plane spring value calculating unit (31) configured to calculate an in-plane spring value for determining an in-plane vibromotive force generated in an in-plane direction of the disc rotor (104); and
   a vibration estimating unit (32) configured to estimate the vibration of the disc brake in the in-plane direction based on the calculated in-plane spring value,
   wherein the in-plane spring value calculating unit (31) calculates the in-plane spring value based on an in-plane frictional coefficient of a contact surface at which the pad model comes in contact with the disc rotor model (104'), an out-of-plane frictional coefficient of the contact surface, an out-of-plane spring value for an out-of-plane vibromotive force generated in an out-of-plane direction of the disc rotor (104), and an actual moment of the pads as a whole measured in a state in which the pads come in contact with the rotating disc rotor (104) on a condition that a value obtained by integrating moment generated at a node constituting the contact surface over an entire contact surface is balanced with the actual moment.

2. The disc brake vibration estimating device according to claim 1, wherein the in-plane spring value calculating unit (31) calculates the in-plane spring value in a state in which the node is transformed from an orthogonal coordinate system to a natural coordinate system.

3. The disc brake vibration estimating device according to claim 1, wherein the in-plane spring value calculating unit (31) calculates the in-plane spring value based on a following Expression

$$K_{cpr} = -\frac{\dfrac{M}{2\det J} - \mu_x K_{pr} \alpha_\zeta^2 \left(1 + \dfrac{1}{\beta\pi}\sin(\beta\pi/2)\right)}{\mu_z \alpha_\xi^2 \left(1 - \dfrac{1}{\beta\pi}\sin(\beta\pi/2)\right)}$$

   where $K_{cpr}$ represents the in-plane spring value, $K_{pr}$ represents the out-of-plane spring value, M represents the actual moment, detJ represents a Jacobian, $\mu_x$ represents the in-plane frictional coefficient of the contact surface, $\mu_z$ represents the out-of-plane frictional coefficient of the contact surface, $\alpha_\zeta$ represents a value based on a magnitude of displacement in the in-plane direction, $\alpha_\xi$ represents a value based on a magnitude of displacement in the out-of-plane direction, and P represents an order of an in-plane vibration mode.

**Patentansprüche**

1. Scheibenbremsenvibrationsschätzvorrichtung, die eine Vibration einer Scheibenbremse (100) schätzt, die eine Bremskraft erzeugt, indem sie Beläge (102, 103) mit einer rotierenden Scheibe (104) in Kontakt bringt, wobei zu einer Zeit des Kontakts der Beläge mit der Scheibe auf Basis zumindest eines Scheibenmodells (104'), das der Scheibe entspricht, und eines Belagmodells (102', 103'), das den Belägen entspricht, beide Modelle finite Elemente aufweisen, wobei die Scheibenbremsenvibrationsschätzvorrichtung aufweist:

   eine Intraplanarfederwertberechnungseinheit (31), die so konfiguriert ist, dass sie einen Intraplanarfederwert zum Bestimmen einer intraplanaren Vibromotivkraft berechnet, die in einer intraplanaren Richtung der Scheibe (104) erzeugt wird; und eine Vibrationsschätzeinheit (32), die so konfiguriert ist, dass sie die Vibration der Scheibenbremse in der intraplanaren Richtung auf Basis des berechneten Intraplanarfederwerts schätzt, wobei die Intraplanarfederwertberechnungseinheit (31) den Intraplanarfederwert auf Basis eines Intraplanarfriktionskoeffizienten einer Kontaktoberfläche, an der das Belagmodell mit dem Scheibenmodell (104') in Kontakt kommt, eines Außerplanarfriktionskoeffizienten der Kontaktoberfläche, eines Außerplanarfederwerts für eine Außerplanarvibromotivkraft, die in einer außerplanaren Richtung der Scheibe (104) erzeugt wird, und eines tatsächlichen Moments der Beläge in ihrer Gesamtheit, das in einem Zustand gemessen wird, in dem die Beläge mit der rotierenden Scheibe (104) unter einer Bedingung in Kontakt kommen, dass ein Wert, der durch ein Integrieren eines Moments, das an einem Knoten erzeugt wird, der die Kontaktoberfläche über eine gesamte Kontaktoberfläche darstellt, erhalten wird, mit dem tatsächlichen Moment ausbalanciert wird, berechnet.

2. Scheibenbremsenvibrationsschätzvorrichtung nach Anspruch 1, wobei die Intraplanarfederwertberechnungseinheit (31) den Intraplanarfederwert in einem Zustand berechnet, in dem der Knoten von einem rechtwinkligen Koordinatensystem in ein natürliches Koordinatensystem transformiert wird.

3. Scheibenbremsenvibrationsschätzvorrichtung nach Anspruch 1, wobei die Intraplanarfederwertberechnungseinheit (31) den Intraplanarfederwert auf Basis der folgenden Gleichung berechnet:

$$K_{cpr} = -\frac{\dfrac{M}{2\det J} - \mu_x K_{pr}\alpha_\zeta^2\left(1 + \dfrac{1}{\beta\pi}\sin(\beta\pi/2)\right)}{\mu_z\alpha_\xi^2\left(1 - \dfrac{1}{\beta\pi}\sin(\beta\pi/2)\right)}$$

wobei $K_{cpr}$ den Intraplanarfederwert darstellt, $K_{pr}$ den Außerplanarfederwert darstellt, M das tatsächliche Moment darstellt, detJ eine Jacobi-Determinante darstellt, $\mu_x$ den Intraplanarfriktionskoeffizienten der Kontaktoberfläche darstellt, $\mu_z$ den Außerplanarfriktionskoeffizienten der Kontaktoberfläche darstellt, $\alpha_\zeta$ einen Wert darstellt, der auf einer Größe der Verdrängung in der Intraplanarrichtung basiert, $\alpha_\xi$ einen Wert darstellt, der auf einer Größe der Verdrängung in der Außerplanarrichtung basiert, und $\beta$ eine Ordnung eines Intraplanarvibrationsmodus darstellt.

## Revendications

1. Dispositif d'estimation de vibration de frein à disque qui estime la vibration d'un frein à disque (100), qui génère une force de freinage en mettant les plaquettes (102, 103) en contact avec un rotor de disque rotatif (104), à un moment de contact des plaquettes avec le rotor de disque sur la base d'au moins un modèle de rotor de disque (104') qui correspond au rotor de disque et d'un modèle de plaquette (102', 103') qui correspond aux plaquettes, les deux modèles ayant des éléments finis, le dispositif d'estimation de vibration de frein à disque comprenant :

   une unité de calcul de valeur élastique en plan (31) configurée pour calculer une valeur élastique en plan afin de déterminer une force vibromotrice sur un plan générée dans une direction de plan du rotor de disque (104) ; et
   une unité d'estimation de vibration (32) configurée pour estimer la vibration du frein à disque dans la direction en plan sur la base de la valeur élastique en plan calculée,
   dans lequel l'unité de calcul de valeur élastique en plan (31) calcule la valeur élastique en plan sur la base d'un coefficient de frottement en plan d'une surface de contact au niveau de laquelle le modèle de plaquette entre en contact avec le modèle de rotor de disque (104'), d'un coefficient de frottement hors plan de la surface de contact, d'une valeur élastique hors plan pour une force vibromotrice hors plan générée dans une direction hors plan du rotor de disque (104), et d'un moment réel des plaquettes dans leur ensemble dans un état dans lequel les plaquettes viennent en contact avec le rotor de disque rotatif (104) à condition qu'une valeur obtenue en intégrant le moment généré au niveau d'un noeud qui constitue la surface de contact sur une surface de contact entière soit équilibrée avec le moment réel.

2. Dispositif d'estimation de vibration de frein à disque selon la revendication 1, dans lequel l'unité de calcul de valeur élastique en plan (31) calcule la valeur élastique en plan dans un état dans lequel le noeud passe d'un système de coordonnées orthogonales à un système de coordonnées naturelles.

3. Dispositif d'estimation de vibration de frein à disque selon la revendication 1, dans lequel l'unité de calcul de valeur élastique en plan (31) calcule la valeur élastique en plan sur la base d'une expression suivante

$$K_{cpr} = -\frac{\dfrac{M}{2\det J} - \mu_x K_{pr}\alpha_\zeta^2\left(1 + \dfrac{1}{\beta\pi}\sin(\beta\pi/2)\right)}{\mu_z\alpha_\zeta^2\left(1 - \dfrac{1}{\beta\pi}\sin(\beta\pi/2)\right)}$$

où $K_{cpr}$ représente la valeur élastique en plan, $K_{pr}$ représente la valeur élastique hors plan, M représente le moment réel, detJ représente un Jacobien, $\mu_x$ représente le coefficient de frottement en plan de la surface de contact, $\mu_z$ représente le coefficient de frottement hors plan de la surface de contact, $\alpha\zeta$ représente une valeur qui repose sur une magnitude de déplacement dans la direction en plan, $\alpha\xi$ représente une valeur sur la base d'une magnitude de déplacement dans la direction hors plan, et $\beta$ représente un ordre d'un mode de vibration en plan.

# FIG.1

# F I G . 2

# F I G . 3

# F I G . 4

# FIG.5

# F I G . 6

# FIG.7

SURFACE PRESSURE [N/mm^2]

A

COMPRESSION
DISPLACEMENT [mm]

# F I G . 8

```
         ┌──────────────┐
         │    START     │
         └──────┬───────┘
                │              ST1
                ▼
    ┌───────────────────────┐
    │  DETERMINE IN-PLANE    │
    │   VIBRATION MODE       │
    └───────────┬───────────┘
                │              ST2
                ▼
    ┌───────────────────────┐
    │  CALCULATE IN-PLANE    │
    │   SPRING VALUE kcpr    │
    └───────────┬───────────┘
                │              ST3
                ▼
    ┌───────────────────────┐
    │   ESTIMATE VIBRATION   │
    └───────────┬───────────┘
                │              ST4
                ▼
    ┌───────────────────────┐
    │   DETERMINE SQUEAL     │
    └───────────┬───────────┘
                │
                ▼
         ┌──────────────┐
         │     END      │
         └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013084363 A